# EUROPEAN PATENT SPECIFICATION

(11) **EP 1 778 796 B1**
(45) Date of publication and mention of the grant of the patent: **03.09.2008**
(21) Application number: 05771506.2
(22) Date of filing: 13.07.2005
(51) Int. Cl.: C09D 5/44, C09D 133/08, C09D 163/00, C09D 183/00, C25D 13/06

(54) **ELECTRO-COAT ADHESION LAYER WITH A SILOXANE TOP COAT**
ELEKTROHAFTSCHICHT MIT SILOXANDECKSCHICHT
COUCHE D'ADHESION DE REVETEMENT ELECTROLYTIQUE A COUCHE DE FINITION EN SILOXANE

(30) Priority: 29.07.2004 US 902246
(43) Date of publication of application: 02.05.2007
(73) Proprietor: MASCO CORPORATION, Taylor, MI 48180 (US)
(72) Inventor: ELMER, Joseph, Lake Orion, MI 48362 (US); FORD, Daniel, Ypsilanti, MI 48197 (US)
(74) Representative: Herden, Andreas F.
(86) International application number: PCT/US2005/024829
(87) International publication number: WO 2006/019803

(56) References cited:
- PATENT ABSTRACTS OF JAPAN vol. 2003, no. 12, 5 December 2003 (2003-12-05) & JP 2005 036287 A (SHINTO PAINT CO LTD), 10 February 2005 (2005-02-10)
- TRADE-MARKS JOURNAL DES MARQUES DE COMMERCE, vol. 48, no. 2452, 24 October 2001 (2001-10-24), XP002366139 Retrieved from the Internet: URL:http://www.collectionscanada.ca/eppp-a rchive/100/201/301/trade_marks_jrn-ef/2001 /20011024.pdf>

## Description

### Field of the Invention

The invention pertains to multiple coatings on to substrates wherein a cathodic electro coat is utilized. The invention also pertains to utilization of polysiloxane coating composition.

### Background of the Invention

When one desires to have a quality finished metallic product such as one coated with chrome, it is desirable that the final product have good long lasting appearance properties. Trying to achieve such desired products is a difficult challenge for the coating industry. Cathodic electro deposition techniques are well known in the industry.

TRADE MARKS JOURNAL DES MARQUES DE COMMERCE, vol. 48, no. 2452, 24. October 2001 (2001-10-24), XP002366139, retrieved from the Internet: URL:http://www.collectionscanada.ca/eppp-archive/100/201/301/trade marks jrn-ef/2001/20011024.pdf shows a paint for electrocoating of metals.

U.S. Patent 6,033,545 (PPG) discloses an electrodepositable coating composition containing novel polysiloxanes which are the reaction product of a polysiloxane containing silicon hydride and at least one material which contains one or more unsaturated bonds capable of undergoing hydrosilyation reaction. Preparation of such disiloxane materials are described in the examples of the case. Cationic e-coat composition utilizing the siloxane prepared in the working examples are described on columns 13 and following. The substrate is described in column 17, line 59 and following where a cold rolled steel substrate had been pretreated with zinc phosphate followed by a chrome rinse and then the application of the electrodepositable coating composition. The electrodepositable coating composition is claimed as a composite of the ionic electrodepositable resin, a cross linking for the resin and a polysiloxane material prepared according to the specification.

Other patents that may be of interest include 6,207,731; 6,013,167; 5,152,880; 5,116,472; 4,416,752; 4,180,442; 4,192,720; 3.990,953; 3,761,371; 3,582,481; 4,854,366; 6,662,588; and 6,547,952.

It is an object of the present invention to obtain a multi coated product on a substrate comprised of chrome or a plastic with a chrome containing layer. The multi coating is one where the first coating onto the metallic substrate is by a cathodic electrodeposition process and applied onto mat electrocoated substrate is a coating composition comprised of a siloxane material.

### Brief Summary of the Invention

Described herein a method of coating a metallic substrate comprising: providing a metallic substrate; applying an electro-composition by a cathodic electrocoating to the substrate; and applying to the electrocoated substrate a siloxane composition, preferably applied from an aqueous coating composition comprised of siloxane material.

Another embodiment of the invention includes the multi coated product having a chrome substrate. The multi coated product has adherence properties, corrosion resistance properties, abrasion resistance, hardness and appearance.

The invention relates to a method of coating a metallic substrate comprising :
providing a metallic substrate;
applying an electrocoating composition by a cathodic electrocoating to the substrate; and
applying to the electrocoated substrate a siloxane composition optionally applied by an aqueous coating composition comprised of a siloxane material.

Further preferred embodiments are dependent claims 2-5.

Furthermore, the invention relates to multi-coated metallic substrate wherein
the metallic substrate is comprised of a chrome coating, to which is applied a cathodic electrodeposition coating and on top of which is applied a siloxane material optionally applied from an aqueous coating composition.

Futher preferred embodiments are dependent claims 7-8.

### Detailed Description of the Invention

The substrate that is utilized in the present invention is preferably comprised of a chrome substrate. Generally however, the chrome is deposited by a variety of techniques onto another substrate such as brass, zinc die cast, or plastic product. The plastic product can be a variety of plastic materials such as thermoplastic or thermoset materials such as polypropylene, polyemylene, polyvinylchloride, nylon, and polyurethane.

The chrome coating that is applied utilizes well known coating techniques. Chromium is frequently applied by electrodeposition process. Chromium electro-deposition is described in Metals Handbook, 9* Edition, Vol. 5, hereby incorporated by reference. Other well known techniques for the chromium electroplating process are disclosed in Brassard "Decorative Electroplating- A Process in Transition", Metal Finishing, pp. 105-108. June 1988; Zaki, "Chromium Plating", PF Director, pp. 146-160; and in U.S. Pat. Nos. 4,460,438, 4,234,396, and 4,093,522.

Chrome plating baths are well known and commercially available. A typical chrome plating bath contains chromic acid or salts thereof, and catalyst ion such as sulfate or fluoride. The catalyst ions can be provided by sulfuric acid or its salts and fluorosilicic acid. The baths may be operated at a temperature of about 44,4-46,66 °C (1120-116°F) Typically in chrome plating a current density of about 150 A (amps) per 929, 029 cm² (square foot), at a 5 to 9 V (volts) is utilized.

The chrome layer generally has a thickness of at least 2 millionths (0.000002) of 2, 54 cm (an inch), preferably at least 5 millionths (0.000005) of 2,54 cm (an inch), and more preferably at least 8 millionths (0.000008) of 2,54 cm (an inch). Generally, the upper range of thickness can vary and is determined by secondary considerations such as cost However, the thickness of the chrome layer should generally not exceed 60 millionths (0.00006) of 2,54 cm (an inch), and more preferably a 40 millionths (0.00004) of 2,54 cm (an inch).

The chromium containing substrate is then coated with a commercially available cathodic electrodeposition coating composition. These materials are well known in the industry. Cathodic electrocoat coating composition utilizes a positively charged composition mat is solubilized by a negatively charged acid. When voltage is applied, the coating composition and acid disassociate and migrate to the oppositely charged electrode. The coating composition is attracted to the negatively charged cathode and the acid is attracted to tiie positively charged anode. Some of the cathodic electrocoating compositions that may be utilized are of the alkyd-acrylic type such as Vectrogard 500 (trademark of Valspar); cathodic acrylic such as Vectroguard 700 (trademark of Valspar) or a cathodic epoxy material such as Vectroguard 8'00 (trademark of Valspar). It is to be appreciated mat one or two applications of a cathodic electrocoat may be utilized depending upon the desired end products. Other cathodic electro-coating compositions are described in U.S. Patent Nos. 4,207,731; 6,013,167; 6,033,545; 5,152,880; and other cathodic electrodeposition coating compositions include amine salt containing resins.

Examples of such cationic film-forming resins include amine salt group-containing resins such as the acid-solubilized reaction products of polyepoxides and primary or secondary amines such as those described in U.S. Pat. Nos. 3,663,389; 3,984,299; 3,947,338; and 3,947,339. Usually, these amine salt group-containing resins are used in combination with a blocked isocyanate curing agent. The isocyanate can be fully blocked as described in the aforementioned U.S. Pat. No. 3,947,338. Also, one-component compositions as described in U.S. Pat. No. 4,134,866 and DE-OS No. 2,707,405 can be used as the film-forming resin. Besides the epoxy-amine reaction products, film-forming resins can also be selected from cationic acrylic resins such as those described in U.S. Pat. Nos. 3,455,806 and 3,928,157.

Besides amine salt group-containing resins, quaternary ammonium salt group containing resins can also be employed. Examples of these resins are those which are formed from reacting an organic polyepoxide with a tertiary amine salt. Such resins are described in U.S. Pat. Nos. 3,962,165; 3,975,346; and 4,001,101. Examples of other cationic resins are ternary sulfonium salt group-containing resins and quaternary phosphonium salt-group containing resins such as those described in U.S. Pat. Nos. 3,793,278 and 3,984,922, respectively. Also, film-forming resins which cure via transesterification such as described in European Application No. 12463 can be used. Further, cationic compositions prepared from Mannich bases such as described in U.S. Pat. No. 4,134,932 can be used.

The resins to which the present invention may also be effective are those positively charged resins which contain primary and/or secondary amine groups. Such resins are described in U.S. Pat. Nos. 3,663,389; 3,947,339; and 4,116,900. In U.S. Pat. No. 3,947,339, a polyketimine derivative of a polyamine such as diethylenetriamine or triethylenetetraamine is reacted with a polyepoxide. When the reaction product is neutralized with acid and dispersed in water, free primary amine groups are generated. Also, equivalent products are formed when polyepoxide is reacted with excess polyamines such as diethylenetriamine and triethylenetetraamine and the excess polyamine vacuum stripped from the reaction mixture. Such products are described in U.S. Pat. Nos. 3,663,389 and 4,116,900.

The ionic electrodepositable resin described above is present in the electrocoating composition in amounts of about 1 to about 60 percent by weight, preferably about 5 to about 25 based on total weight of the electrodeposition bath.

The aqueous compositions of the present invention are in the form of an aqueous dispersion. The term "dispersion" is believed to be a two-phase transparent, translucent or opaque resinous system in which the resin is in the dispersed phase and the water is in the continuous phase. The average particle size of the resinous phase is generally less than 1.0 (1.0) and usually less than 0.5 µm (0.5 microns), preferably less than 0.15 µm (0.15 micron).

The concentration of the resinous phase in the aqueous medium is at least 1 and usually from 2 to 60 percent by weight based on total weight of the aqueous dispersion.

Electrodeposition baths are typically supplied as two components: (1) a clear resin feed, which includes generally the ionic electrodepositable resin, i.e., the main film-forming polymer, and/or crosslinker and any additional water-dispersible, non-pigmented components; and (2) a pigment paste, which generally includes one or more pigments, a water-dispersible grind resin which can be the same or different from the main-film forming polymer, and optionally, additives such as wetting or dispersing aids. Electrodeposition bath components (1) and (2) are dispersed in an aqueous medium which comprises water and, usually, coalescing solvents.

The conditions under which electrodeposition is carried out are, in general, similar to those used in electrodeposition of other types of coatings. The applied voltage may be varied and can be, for example, as low as i V (volt) to as high as several thousand volts, but typically between SO and 500 V (volts), The current density is usually between 0.5 A (ampere) and 5 A (amperes) per 929, 029 cm² (square foot ) and tends to decrease during electrodeposition indicating the formation of an insulating film. The electrodepositable coating compositions of the present invention can be applied to a variety of electroconductive substrates especially metals such as steel, aluminum, copper, magnesium, conductive carbon coated materials and chromium.

After the coating has been applied by electrodeposition, it is cured usually by baking at elevated temperatures such as 90° to 260° C for 1 to 40 minutes.

After the cathodic electrocoat is applied to the substrate, a siloxane such as a polysiloxane material is applied to the coated substrate. A wide variety of commercially available polysiloxane materials are available such as MicroGuard AD95 (Trademark of Adsil, Inc. for a siloxane coating composition). Before utilizing the Adsil AD95 material there are mixing instructions that should be followed.

MicroGuard AD95 is a three-component material and is mixed for curing to occur. This product is packaged, in kit form, with separate containers for Components A, B & C. For proper mixing:
- Pour the Component A liquid into a clean, white or clear HDPE plastic bucket, only. Then, pour the Component B liquid into the Component A.
- Using a variable speed drill and mixing paddle, blend the A & B components for 15 minutes at low speed. Avoid striking the side of the bucket with the paddle while it is rotating. A moderate exothermic heat reaction occurs as the components are mixed together.
- Next, add the Component C liquid into the admixture of the A & B components. Again, blend for 15 additional minutes at low speed.
- Cover the bucket with a lid and allow the mixed material to induct ("sweat in") for 30 minutes before application. The useable pot life of mixed material is 4 to 6 hours, depending on ambient conditions.

Part A is 98 percent by weight alkoxy silanes and 2 percent methyl alcohol. Component B is acetic acid (2 percent by weight) in distilled water. Component C is 36-38 weight percent isopropyl alcohol, 22-23 percent by weight 1-ethoxy-2-propanol and 28-32 percent by weight 2-propanol, 1-propoxy. The polysiloxane materials that are applied are in water and are used after proper mixing as described above. A polysiloxane material is one that has repeating -Si-O-Si- groups.

Upon completion of the deposition time, the rectifier is turned off, the leads are disconnected, and the part is removed from the bath.

Excess e-coat bath, called drag-out, is rinsed from the part using a DI (deionized) water rinse that may or may not contain a commercially available surfactant to aide in consistent dewetting.

Once removed from the bath the coated part may be handled the following ways for the subsequent application of the siloxane coating:
a. The part is coated with the siloxane coating directly. The two coatings are cured together in a subsequent oven treatment.
b. The part (e-coat paint) is dehydrated via baking in an oven at a temperature lower than the curing/crosslinking temperature for the system being used. The siloxane coating is then applied on the uncured e-coat and the two coatings are cured together in a subsequent oven treatment. "Coating stacks" using this method are frequently defect free i.e., an absence of cracking, and cloudiness.
c. Fully curing the e-coat by baking in an oven according to the specific curing instructions for the e-coat used. The siloxane coating is applied on the cured e-coat and then cured according to the manufacturer's instructions to create a two-coat system.

The siloxane coating can be applied via spray, dip, brush, or any other method that does not disturb the appearance or integrity of the underlying e-coat layer.

While not being limited to any theory, it is believed that in order to form a polymer network, siloxane materials undergo hydrolysis and can then participate in subsequent reactions to form the network such as:
a. Condensation reactions with other siloxane hydroxyl groups or with hydroxyls present in the e-coat base layer (e.g.acrylic resins, epoxy resins).
b. Organic functional groups present in the e-coat layer that are reactive with the siloxane hydroxyls may also react to become part of the polymer network resulting in chemical bonding between the layers. Examples of organic functional groups that might react with the siloxane hydroxyls might include: isocyanate, carboxylic acids, and melamine formaldehyde pendant ether groups.

After the cathodic electrocoated composition is applied, the coated substrate may be allowed to dry. Thereafter, it is dipped, sprayed or coated with the siloxane material. Trie final product can then be air dried for a number of hours, such as from 6-24 hours or long. A more rapid curing can occur by the application of heat such as from about 82,22-204,44 °C (180-400 degrees F). In this fashion the electrocoated material is finally cured at the same time as the siloxane material is cured.

The following examples illustrate the invention. All parts and percentages are on a per weight basis unless otherwise indicated and all temperatures are in degrees C.

### Examples

### Example 1:

A 0.0762 m x 0.203 m (3" x 8") chrome-plated test panel was immersed in a Valspar Vectrogard 730 cathodic acrylic electrocoat bath. Electrical leads from a low current high voltage electrical rectifier were attached to the part to be painted (negative leads) and to the counter electrodes (positive leads). The rectifier power was turned on to a voltage of 60V over a period of approximately 20 seconds. After 2 minutes the power to the rectifier was turned off, the electrical leads disconnected, and the painted part was removed from the bath and rinsed with DI water. The part was allowed to dehydrate a minimum of 10 minutes before curing for 20 minutes at 148,88°C . After cooling to room temperature the part was coated with Adsil AD-95 polysiloxane coating using a foam brush. The part was allowed to air dry for purposes of solvent evaporation for a minimum of 5 minutes before curing the part 30 minutes at 121,11°C (250°F). One day later the adhesion was measured using ASTM method D3359 and the adhesion was rated as 5B; no pickoff of coating was detected in the Crosshatch area indicating excellent adhesion.

### Example 2:

A 0.0763m x 0.203n (3" x 8") chrome-plated test panel was coated with Valspar Vectrogard 730 cathodic acryolic e-coat using the process from example 1. At die conclusion of the 10-minute dehydration step die part was coated with Adsil AD-95 polysiloxane material using a foam brush. The part was allowed to air dry for purposes of solvent evaporation for a minimum of 5 minutes before curing the part 30 minutes at 121,11°C (250°F). The e-coat and polysiloxane materials were therefore co-cured using this procedure. One day later the adhesion was measured using ASTM method D3359 and the adhesion was rated as 5B; no pickoff of coating was detected in the Crosshatch area indicating excellent adhesion.

## Claims

1. A method of coating a metallic substrate comprising:
providing a metallic substrate;
applying an.electrocoating composition by a cathodic electrocoating to the substrate; and
applying to the electrocoated substrate a siloxane composition optionally applied by an aqueous coating composition comprised of a siloxane material.

2. The method of claim 1 wherein the substrate to be electrocoated is comprised of chrome on its surface.

3. The method of claim 1 wherein the siloxane material comprises at least 80 percent of the silicon containing materials.

4. The method of claim 1 wherein the siloxane material is a polysiloxane material.

5. The method of claim 1 wherein the electrocoating composition is comprised of an acrylic or epoxy resin.

6. A multi-coated metallic substrate wherein the metallic substrate is comprised of a chrome coating, to which is applied a cathodic electrodeposition coating and on top of which is applied a siloxane material optionally applied from an aqueous coating composition.

7. The multi-coated metallic substrate of the claim 6 wherein the siloxane material is a polysiloxane.

8. The multi-coated metallic substrate of claim 7 wherein electrocoating composition is comprised of an acrylic or epoxy resin.

## Patentansprüche

1. Verfahren zur Beschichtung eines metallischen Substrats, umfassend:
Bereitstellen eines metallischen Substrats;
Aufbringen einer Elektrotauchlackzusammensetzung auf das Substrat mittels kathodischer Elektrotauchlackierung; und
Aufbringen einer Siloxanzusammensetzung auf das elektrotauchlackierte Substrat, wobei diese optional mittels einer wässrigen Beschichtungszusammensetzung aufgebracht wird, die ein Siloxanmaterial umfasst.

2. Verfahren nach Anspruch 1, bei welchem das Substrat, das eine Elektrotauchlackbeschichtung erhalten soll, an seiner Oberfläche aus Chrom besteht.

3. Verfahren nach Anspruch 1, wobei das Siloxanmaterial zumindest 80 % der siliciumhaltigen Stoffe ausmacht.

4. Verfahren nach Anspruch 1, bei welchem das Siloxanmaterial ein Polysiloxanmaterial ist.

5. Verfahren nach Anspruch 1, bei welchem die Elektrotauchlackzusammensetzung aus einem Acryl- oder Epoxidharz besteht.

6. Mehrfach beschichtetes metallisches Substrat, wobei das metallische Substrat eine Chrombeschichtung umfasst, auf welcher eine Beschichtung durch kathodische Elektrotauchlackierung aufgebracht ist und auf dieser ein Siloxanmaterial aufgebracht ist, das optional aus einer wässrigen Beschichtungszusammensetzung aufgebracht wird.

7. Mehrfach beschichtetes metallisches Substrat nach Anspruch 6, bei welchem das Siloxanmaterial ein Polysiloxanmaterial ist.

8. Mehrfach beschichtetes metallisches Substrat nach Anspruch 7, bei welchem die Elektrotauchlackzusammensetzung aus einem Acryl- oder Epoxidharz besteht.

## Revendications

1. Procédé pour le revêtement d'un substrat métallique, comprenant les étapes consistant à :
fournir un substrat métallique ;
appliquer une composition de revêtement électrophorétique par revêtement électrophorétique cathodique au substrat ; et
appliquer au substrat ayant subi le revêtement électrophorétique une composition de siloxane appliquée éventuellement avec une composition aqueuse de revêtement constituée d'une matière du type siloxane.

2. Procédé suivant la revendication 1, dans lequel le substrat destiné au revêtement électrophorétique est constitué de chrome sur sa surface.

3. Procédé suivant la revendication 1, dans lequel la matière du type siloxane représente au moins 80 % des matières contenant du silicium.

4. Procédé suivant la revendication 1, dans lequel la matière du type siloxane est une matière du type polysiloxane.

5. Procédé suivant la revendication 1, dans lequel la composition de revêtement électrophorétique est constituée d'une résine acrylique ou époxy.

6. Substrat métallique à revêtements multiples, ledit substrat métallique étant constitué d'un revêtement de chrome, auquel est appliqué un revêtement d'électrodéposition cathodique, sur lequel est appliquée une matière du type siloxane éventuellement appliquée à partir d'une composition aqueuse de revêtement.

7. Substrat métallique à revêtements multiples suivant la revendication 6, dans lequel la matière du type siloxane est un polysiloxane.

8. Substrat métallique à revêtements multiples suivant la revendication 7, dans lequel la composition de revêtement électrophorétique est constituée d'une résine acrylique ou époxy.
